# EUROPÄISCHE PATENTSCHRIFT

(11) **EP 4 306 963 B1**
(45) Veröffentlichungstag und Bekanntmachung des Hinweises auf die Patenterteilung: **20.05.2026**
(21) Anmeldenummer: 22184856.7
(22) Anmeldetag: 14.07.2022
(51) Int. Cl.: G01N 35/00

(54) **REGELKREIS-BASIERTE WERTANPASSUNG IN IN-VITRO-DIAGNOSE-SYSTEMEN**
CONTROL CIRCUIT-BASED VALUE ADAPTATION IN IN VITRO DIAGNOSTIC SYSTEMS
AJUSTEMENT DE LA VALEUR BASÉ SUR LE CIRCUIT DE RÉGULATION DANS LES SYSTÈMES DE DIAGNOSTIC IN VITRO

(43) Veröffentlichungstag der Anmeldung: 17.01.2024
(73) Patentinhaber: Siemens Healthcare Diagnostics Products GmbH, 35041 Marburg (DE)
(72) Erfinder: Bornmann, Mike, 35041 Marburg (DE); Schröder, Ulrich, 21339 Lüneburg (DE)
(74) Vertreter: Siemens Healthineers Patent Attorneys

(56) Entgegenhaltungen:
- WO-A1-2022/065236
- US-A1- 2006 042 964
- US-A1- 2019 285 659
- US-A1- 2021 263 018

## Beschreibung

### TECHNISCHES GEBIET

Die vorliegende Erfindung bezieht sich auf ein System, das die Bereitstellung eines gleichbleibenden Ergebniswertes durch ein in-vitro-Diagnose-Gerät ermöglicht, umfassend ein in-vitro-Diagnose-Gerät, mindestens eine Steuereinheit, die mit dem in-vitro-Diagnose-Gerät bi-direktional verbunden ist und dazu konfiguriert ist, die Abweichung eines internen Kalibrier-/Kontrollmessparameters von einem definierten Standardwert des mindestens einen in-vitro-Diagnose-Gerätes auszuwerten und wobei die Steuereinheit dazu konfiguriert ist, den Standardwert, für den ein abweichender interner Kalibrier-/Kontrollmessparameter detektiert wurde, zu modifizieren und den modifizierten Standardwert an das in-vitro-Diagnose-Gerät zu übermitteln; sowie ein entsprechendes Verfahren.

### HINTERGRUND

In-vitro-Diagnose-Systeme (IvD) messen qualitative und quantitative Ergebnisse mehrerer Parameter des Gesundheitszustands anhand von Patientenproben. Bei den Patientenproben handelt es sich meist um Flüssigkeiten wie Blut, Serum, Plasma, oder Urin. Jeder Parameter basiert in der Regel auf einem spezifischen biochemischen Test, der in der Lage ist, mit der Patientenprobe so zu reagieren, dass die Ergebnisse von einem IvD-Analysegerät gemessen werden können. Diese hochautomatisierten Analysegeräte können Patientenproben verarbeiten und spezifische Assays mit ihren Reagenzienkomponenten parametrieren, um ein Patientenergebnis zu erhalten. Die Patientenergebnisse werden dann typischerweise dem Gesundheitsdienstleister mitgeteilt und können einen normalen oder abnormalen Gesundheitszustand des Patienten anzeigen. Für quantitative Tests werden in der Regel Bereiche zur Klassifizierung eines Zustands in, oder außerhalb der Zielwerte festgelegt. Daher ist es von großer Bedeutung, dass die in-vitro-Diagnose-Systeme Ergebnisse mit einer geringen Variabilität reproduzieren können. Ist die Variabilität der Ergebnisse zu groß, wird die Diagnose beeinträchtigt und eine Korrelation der Messergebnisse wird untereinander und über die Zeit erschwert oder verhindert.

Um die Variabilität in den Messergebnissen zu verringern und die Genauigkeit und Richtigkeit der Messergebnisse zu gewährleisten, um den Zustand eines Patienten in Bezug auf einen fraglichen Parameter wirklichkeitsgetreu und korrekt wiedergeben, werden typischerweise Reagenzienchargen mit chargenspezifisch zugeordneten Zielwerten versehen, die bei der Testdurchführung berücksichtig und nach Chargenwechseln verändert werden. Sich ändernde Zielwerte widersprechen jedoch dem Konzept festgelegter medizinischer Entscheidungspunkte für die Darstellung von diagnostisch relevanten Zuständen.

Weiterhin verfügt jedes Assay typischerweise über ein Kontrollsystem, d. h. standardisiertes Kontrollmaterial wird täglich oder wöchentlich getestet, bevor echte Patientenproben untersucht werden können. Dem Kontrollmaterial sind Werte zugeordnet, die in bestimmten Bereichen liegen müssen, um die Funktionsfähigkeit des in-vitro-Diagnose-Systems zu bestätigen. Die Schwankungsbreite dieser Bereiche kann bis zu 20 % betragen, so dass die Variabilität der Resultate stark erhöht wird. Sollten die Werte der Kontrollmaterialien einzelner Systeme außerhalb des genannten Bereichs liegen, können systemspezifische Werte angefordert werden, die es erlauben individuelle Systemeigenschaften zu definieren.

Die oben genannten Maßnahmen zur Verringerung der Variabilität der Messergebnisse zeigen, dass das bisherige Vorgehen zu Ungenauigkeiten bei der Messung von Patientenproben und zu Verzögerungen bei der Diagnose führen kann. In US 2019/285659 A1, US 2006/042964 A1, US 2021/263018 A1 und WO 2022/065236 A1 sind verschiedene Systeme und Methoden zur Kalibration von in-vitro-Diagnose-Geräten beschrieben.

Der vorliegenden Erfindung liegt somit die Aufgabe zugrunde, Verfahren und Mittel bereitzustellen, welche es erlauben, in-vitro-Diagnose-Verfahren akkurater durchzuführen und die Bereitstellung von gleichbleibenden Ergebniswerten zu gewährleisten.

### KURZE ZUSAMMENFASSUNG DER ERFINDUNG

Diese Aufgabe wird durch die Gegenstände der unabhängigen Ansprüche gelöst. In den abhängigen Ansprüchen sind weitere vorteilhafte Aspekte der Erfindung reflektiert.

Die Erfindung betrifft zunächst ein System, umfassend:
- mindestens ein in-vitro-Diagnose-Gerät, das dazu konfiguriert ist, ein diagnostisches Assay durchzuführen, wobei das in-vitro-Diagnose-Gerät dazu konfiguriert ist, eine Abweichung eines internen Kalibrier-/Kontrollmessparameters von einem definierten Standardwert, oder einer Kalibrierungskurve zu detektieren und an eine Steuereinheit weiterzuleiten;
- mindestens eine Steuereinheit, die mit dem mindestens einen in-vitro-Diagnose-Gerät bi-direktional verbunden ist und dazu konfiguriert ist, die Abweichung eines internen Kalibrier-/Kontrollmessparameters von einem definierten Standardwert des mindestens einen in-vitro-Diagnose-Gerätes auszuwerten, wobei die Steuereinheit für die Auswertung zusätzlich auf Daten aus einer Datenbank zugreift;
wobei die Steuereinheit dazu konfiguriert ist, den Standardwert, für den ein abweichender interner Kalibrier-/Kontrollmessparameter detektiert wurde, zu modifizieren und den modifizierten Standardwert an das in-vitro-Diagnose-Gerät zu übermitteln, das die Abweichung detektiert hat, um die Bereitstellung eines gleichbleibenden Ergebniswertes durch das in-vitro-Diagnose-Gerät zu ermöglichen.

Dieses System erlaubt es vorteilhafterweise, eine regelungsbasierte Wertanpassung durchzuführen und dadurch die Genauigkeit der Messergebnisse zu erhöhen und über einen langen Zeitraum hinweg Chargen- und Einfluss-unabhängig gleichbleibende Ergebniswerte bereitzustellen.

In einer bevorzugten Ausführungsform ist der interne Kalibrier-/Kontrollmessparameter ein Parameter, der mit den für die Durchführung der in-vitro-Diagnose verwendeten Assayreagenzien assoziiert ist.

In einer weiteren bevorzugten Ausführungsform ist der interne Kalibrier-/Kontrollmessparameter ein Gerätesystemkomponenten-Parameter.

Ferner ist die Steuereinheit dazu konfiguriert, Abweichungen von einem definierten Standardwert in Abhängigkeit von verwendeten Assayreagenzien-Chargen, den Gerätesystemkomponenten, oder dem Gerätetyp auszuwerten.

In einer anderen bevorzugten Ausführungsform des erfindungsgemäßen Systems ist das mindestens eine in-vitro-Diagnose-Gerät dazu konfiguriert, zusätzlich Messdaten einer mit einem Assay gemessenen Patientenprobe (Patientenassay) an die Steuereinheit weiterzuleiten.

Es ist weiter bevorzugt, dass die Steuereinheit zusätzlich dazu konfiguriert ist, die Messdaten des Patientenassays anhand von früheren Messdaten aus Patientenassays, Kontrollen und/oder Kalibrationen auszuwerten.

Ferner umfasst die Auswertung einen Vergleich der Abweichungen eines internen Kalibrier-/Kontrollmessparameters und von Messdaten von Patientenassays einer Vielzahl von in-vitro-Diagnose-Geräten.

In einer weiteren bevorzugten Ausführungsform des erfindungsgemäßen Systems ist die Steuereinheit dazu konfiguriert, auf eine Datenbank mit Daten zu den mit den Assayreagenzien assoziierten Mess- bzw. Kalibrier-/Kontrollmessparametern und/oder mit Daten zu den Gerätesystemkomponenten-Parametern und/oder mit Daten zu den Patientenassays zuzugreifen.

Weiterhin bevorzugt ist, dass der Standardwert durch einen Korrekturfaktor modifiziert wird, der auf Basis (i) einer individuellen Abweichung eines in-vitro-Diagnose-Gerätes von einem Standardwert, (ii) einer Assayreagenzien-Chargen-abhängigen Abweichung mehrerer in-vitro-Diagnose-Geräte von einem Standardwert, (iii) einer Abweichung von Messdaten aus Patientenassays von früheren Messdaten aus Patientenassays, (iv) einer Gerätetyp-abhängigen Abweichung mehrerer in-vitro-Diagnose-Geräte von einem Standardwert, (v) einer Gerätesystemkomponenten-abhängigen Abweichung mehrerer in-vitro-Diagnose-Geräte von einem Standardwert, (vi) einer Abweichung der Mess- bzw. Kalibrier-/Kontrollmessparameter von Mess- bzw. Kalibrier-/Kontrollmessparametern in einer Vielzahl von in-vitro-Diagnose-Geräten und/oder (vii) einer Kombination einer Gerätesystemkomponenten-abhängigen Abweichung, einer Assayreagenzien-Chargen-abhängigen Abweichung und/oder einer Abweichung von Messdaten aus Patientenassays bestimmt wird.

In zusätzlichen, bevorzugten Ausführungsformen bezieht sich die vorliegende Anmeldung auf ein System wie oben beschrieben, wobei das mindestens eine in-vitro-Diagnose-Gerät dazu konfiguriert ist, die Abweichung eines internen Kalibrier-/Kontrollmessparameters von einem definierten Standardwert einmal pro Stunde, pro 12 h, pro Tag, pro 2, 3, 4, 5, 6 Tage, pro Woche, pro 2, 3 Wochen, pro Monat, pro 2, 3, 4, 5, 6, 7, 8, 9, 10, 11 Monate, pro Jahr oder über den Lebenszyklus des in-vitro-Diagnose-Gerätes, der Assayreagenzien, oder einer Systemkomponente oder eines Teils des Lebenszyklus zu detektieren und an die Steuereinheit weiterzuleiten.

In einem weiteren Aspekt bezieht sich die Anmeldung auf ein Verfahren zur Modifizierung eines definierten Standardwertes eines internen Kalibrier-/Kontrollmessparameters mindestens eines in-vitro-Diagnose-Gerätes, wobei der im in-vitro-Diagnose-Gerät gemessene interne Kalibrier-/Kontrollmessparameter eine Abweichung von dem Standardwert aufweist, umfassend die Weiterleitung der Abweichung an mindestens eine Steuereinheit, die Auswertung der Abweichung in der Steuereinheit und die Übermittlung eines auf Basis der Abweichung modifizierten Standardwertes an das in-vitro-Diagnose-Gerät, das die Abweichung detektiert hat, wobei zusätzlich Messdaten eines Patientenassays an die Steuereinheit weitergeleitet werden, und wobei bevorzugt die Abweichung von Initialmessungen des internen Kalibrier-/Kontrollmessparameters, und weiter bevorzugt die Abweichung des internen Kalibrier-/Kontrollmessparameters von einem definierten Standardwert einmal pro Stunde, pro 12 h, pro Tag, pro 2, 3, 4, 5, 6 Tage, pro Woche, pro 2, 3 Wochen, pro Monat, pro 2, 3, 4, 5, 6, 7, 8, 9, 10, 11 Monate, pro Jahr oder über den Lebenszyklus des in-vitro-Diagnose-Gerätes, der Assayreagenzien, oder einer Systemkomponente oder eines Teils des Lebenszyklus detektiert und weitergeleitet wird.

In einer bevorzugten Ausführungsform des erfindungsgemäßen Verfahrens ist der interne Kalibrier-/Kontrollmessparameter ein Parameter, der mit den für die Durchführung der in-vitro-Diagnose verwendeten Assayreagenzien assoziiert ist, oder ein Gerätesystemkomponenten-Parameter.

Ferner wird die Auswertung der Abweichung von einem definierten Standardwert in Abhängigkeit von verwendeten Assayreagenzien-Chargen, den Gerätesystemkomponenten, und/oder dem Gerätetyp durchgeführt, und die Auswertung umfasst einen Vergleich der Abweichungen eines internen Kalibrier-/Kontrollmessparameters einer Vielzahl von in-vitro-Diagnose-Geräten.

In einer zusätzlichen bevorzugten Ausführungsform des erfindungsgemäßen Verfahrens wird der Standardwert durch einen Korrekturfaktor modifiziert, der auf Basis (i) einer individuellen Abweichung eines in-vitro-Diagnose-Gerätes von einem Standardwert, (ii) einer Assayreagenzien-Chargen-abhängigen Abweichung mehrerer in-vitro-Diagnose-Geräte von einem Standardwert, (iii) einer Abweichung von Messdaten aus Patientenassays von früheren Messdaten aus Patientenassays, (iv) einer Gerätetyp-abhängigen Abweichung mehrerer in-vitro-Diagnose-Geräte von einem Standardwert, (v) einer Gerätesystemkomponenten-abhängigen Abweichung mehrerer in-vitro-Diagnose-Geräte von einem Standardwert, (vi) einer Abweichung der Mess- bzw. Kalibrier-/Kontrollmessparameter von Mess- bzw. Kalibrier-/Kontrollmessparametern in einer Vielzahl von in-vitro-Diagnose-Geräten und/oder (vii) einer Kombination einer Gerätesystemkomponenten-abhängigen Abweichung, einer Assayreagenzien-Chargen-abhängigen Abweichung und/oder einer Abweichung von Messdaten aus Patientenassays bestimmt wird.

### KURZE BESCHREIBUNG DER FIGUREN

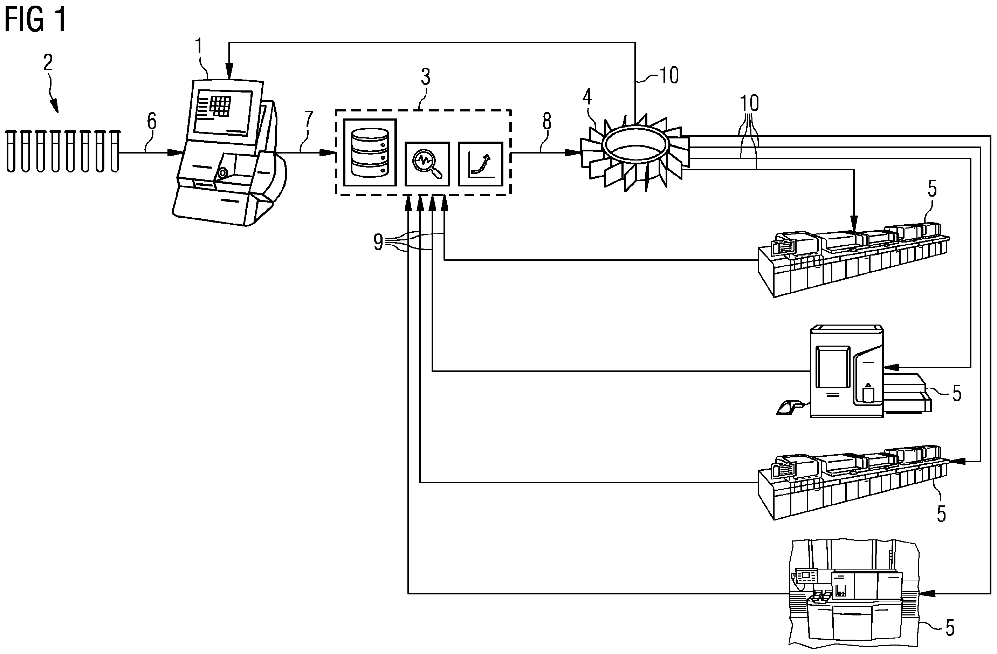

**Figur 1** zeigt eine Ausführungsform des erfindungsgemäßen Systems, in der zunächst in einem in-vitro-Diagnose-Gerät **(1)** Messergebnisse eines Assays **(2)** erhalten werden **(6)** und auf Abweichungen eines internen Kalibrier-/Kontrollmessparameters von einem definierten Standardwert überprüft werden. Entsprechende Werte werden an eine Steuereinheit **(3)** weitergegeben **(7).** Die Steuereinheit ist dabei mit einem Stellglied **(4)** verbunden, das einen von der Steuereinheit modifizierten Standardwert nach Übertragung **(8)** an das in-vitro-Diagnose-Gerät **(1)** übermittelt **(10).** Gleichzeitig werden die modifizierten Standardwerte an zusätzliche in-vitro-Diagnose-Geräte **(5),** z.B. in Krankenhäusern oder an anderen Standorten weitergeleitet. Von diesen werden damit generierte Vergleichswerte an die Steuereinheit **(3)** zurück übermittelt, sodass ein bi-direktionaler Datenaustausch **(9, 10)** entsteht.

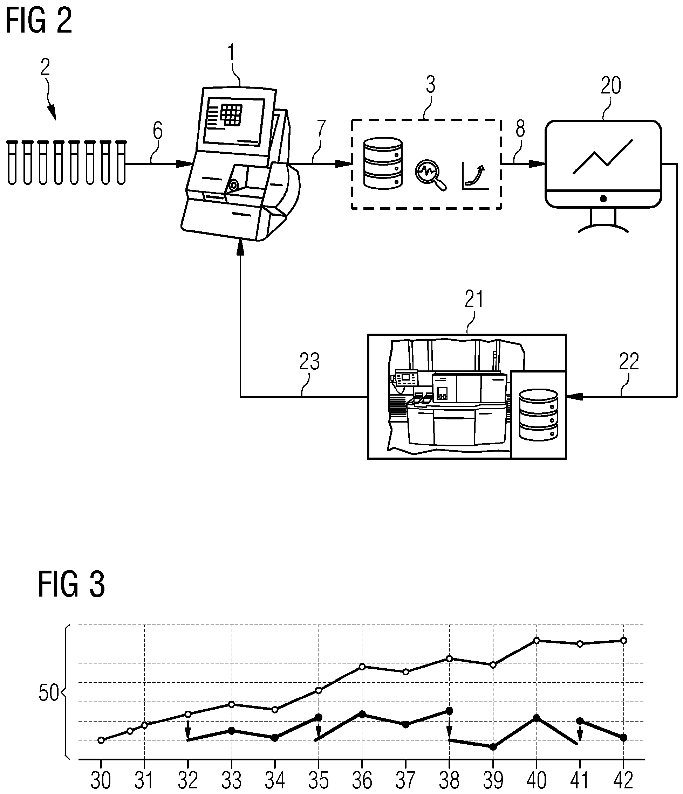

**Figur 2** zeigt eine weitere Ausführungsform des erfindungsgemäßen Verfahrens, die im Wesentlichen dem in Fig. 1 gezeigten System entspricht mit dem Unterschied, dass die Steuereinheit mit einer Anwendung **(20)** interagiert **(8),** die den von der Steuereinheit modifizierte Standardwert über ein Netzwerk **(22)** an weiteres Gerät **(21)** zur Anwendungskorrektur bzw. Anpassung der Parametereinstellungen übermittelt, wobei dieses weitere Gerät mit dem in-vitro-Diagnose-Gerät verbunden ist und so eine bi-direktionale Interaktion erlaubt.
**Figur** 3 zeigt eine schematisierte Messkurve eines Assays ohne Anpassung (obere Kurve) und mit erfindungsgemäßer Anpassung (untere, unterbrochene Kurve). Die Messzeitpunkte sind auf der Abszisse eingetragen **(30, 31, 32, 33, 34, 35, 36, 37, 38, 39, 40, 41, 42).** Die jeweils gemessenen Werte **(50)** sind auf der Ordinate verzeichnet. Wie sich der Figur entnehmen lässt, sind Anpassungen der Parameterwerte nach bestimmten Messzeitpunkten **(32, 35, 38, 41)** notwendig, um gleichbleibende Ergebniswerte durch das in-vitro-Diagnose-Gerät zu ermöglichen.

### DETAILLIERTE BESCHREIBUNG VON AUSFÜHRUNGSFORMEN

Obwohl die vorliegende Erfindung in Bezug auf bestimmte Ausführungsformen beschrieben wird, ist diese Beschreibung nicht in einem einschränkenden Sinne aufzufassen.

Bevor beispielhafte Ausführungsformen der vorliegenden Erfindung im Detail beschrieben werden, werden Definitionen gegeben, die für das Verständnis der vorliegenden Erfindung wichtig sind.

Wie in dieser Beschreibung und in den beigefügten Ansprüchen verwendet, schließen die Singularformen von "ein" und "eine" auch die jeweiligen Pluralformen ein, sofern der Kontext nicht eindeutig etwas anderes vorschreibt.

Im Zusammenhang mit der vorliegenden Erfindung bezeichnen die Begriffe "ungefähr" und "etwa" ein Genauigkeitsintervall, das ein Fachmann verstehen wird, um die technische Wirkung des betreffenden Merkmals noch sicherzustellen. Der Begriff gibt typischerweise eine Abweichung von dem angegebenen Zahlenwert von ±20 %, vorzugsweise ±15 %, stärker bevorzugt ±10 % und noch stärker bevorzugt ±5 % an.

Es versteht sich, dass der Begriff "umfassend" nicht einschränkend ist. Für die Zwecke der vorliegenden Erfindung wird der Begriff "bestehend aus" oder "im Wesentlichen bestehend aus" als eine bevorzugte Ausführungsform des Begriffs "umfassend aus" angesehen.

Wenn im Folgenden eine Gruppe so definiert wird, dass sie mindestens eine bestimmte Anzahl von Ausführungsformen umfasst, soll dies auch eine Gruppe umfassen, die vorzugsweise nur aus diesen Ausführungsformen besteht.

Darüber hinaus werden die Begriffe "(i)", " (ii) ", " (iii) " oder " (a) ", " (b) ", "(c) ", "(d)" oder "erste", "zweite", "dritte" usw. und dergleichen in der Beschreibung oder in den Ansprüchen zur Unterscheidung zwischen ähnlichen Elementen und nicht notwendigerweise zur Beschreibung einer sequentiellen oder chronologischen Reihenfolge verwendet.

Es versteht sich, dass die so verwendeten Begriffe unter geeigneten Umständen austauschbar sind und dass die hier beschriebenen Ausführungsformen der Erfindung in anderer Reihenfolge als hier beschrieben verwendet werden können. Falls sich die Begriffe auf Schritte einer Methode, eines Verfahrens oder einer Verwendung beziehen, gibt es keine Zeit- oder Zeitintervallkohärenz zwischen den Schritten, d.h. die Schritte können gleichzeitig ausgeführt werden oder es können Zeitintervalle von Sekunden, Minuten, Stunden, Tagen, Wochen usw. zwischen solchen Schritten vorliegen, sofern nichts anders angegeben ist.

Es versteht sich, dass diese Erfindung nicht auf die hier beschriebenen speziellen Verfahren, Protokolle usw. beschränkt ist, da diese variieren können. Es versteht sich auch, dass die hierin verwendete Terminologie nur dem Zweck dient, bestimmte Ausführungsformen zu beschreiben, und nicht dazu gedacht ist, den Umfang der vorliegenden Erfindung einzuschränken, der nur durch die beigefügten Ansprüche begrenzt wird.

Die Zeichnungen sind als schematische Darstellungen zu betrachten und in den Zeichnungen dargestellte Elemente sind nicht notwendigerweise maßstabsgetreu dargestellt. Vielmehr sind die verschiedenen Elemente so dargestellt, dass ihre Funktion und ihr allgemeiner Zweck für einen Fachmann offensichtlich werden. Sofern nicht anders definiert, haben alle hierin verwendeten technischen und wissenschaftlichen Begriffe die gleichen Bedeutungen, wie sie üblicherweise von einem Durchschnittsfachmann verstanden werden.

Wie oben ausgeführt, bezieht sich die vorliegende Erfindung auf ein System, umfassend: mindestens ein in-vitro-Diagnose-Gerät, das dazu konfiguriert ist, ein diagnostisches Assay durchzuführen, wobei das in-vitro-Diagnose-Gerät dazu konfiguriert ist, eine Abweichung eines internen Kalibrier-/Kontrollmessparameters von einem definierten Standardwert, oder einer Kalibrierungskurve zu detektieren und an eine Steuereinheit weiterzuleiten; mindestens eine Steuereinheit, die mit dem mindestens einem in-vitro-Diagnose-Gerät bi-direktional verbunden ist und dazu konfiguriert ist, die Abweichung eines internen Kalibrier-/Kontrollmessparameters von einem definierten Standardwert des mindestens einen in-vitro-Diagnose-Gerätes auszuwerten, wobei die Steuereinheit für die Auswertung zusätzlich auf Daten aus einer Datenbank zugreift; wobei die Steuereinheit dazu konfiguriert ist, den Standardwert, für den ein abweichender interner Kalibrier-/Kontrollmessparameter detektiert wurde, zu modifizieren und den modifizierten Standardwert an das in-vitro-Diagnose-Gerät zu übermitteln, das die Abweichung detektiert hat, um die Bereitstellung eines gleichbleibenden Ergebniswertes durch das in-vitro-Diagnose-Gerät zu ermöglichen. Dabei ist die Steuereinheit dazu konfiguriert, Abweichungen von einem definierten Standardwert in Abhängigkeit von verwendeten Assayreagenzien-Chargen, den Gerätesystemkomponenten oder dem Gerätetyp auszuwerten, wobei die Auswertung einen Vergleich der Abweichungen eines internen Kalibrier-/ Kontrollmessparameters und von Messdaten von Patientenassays einer Vielzahl von in-vitro-Diagnose-Geräten umfasst.

Der Begriff "Kalibrier-/Kontrollmessparameter" wird vorliegend verwendet für Kalibrier- und/oder Kontrollmessparameter.

Der Begriff "in-vitro-Diagnose-Gerät", wie hier verwendet, bezieht sich auf ein Gerät, das so konfiguriert ist, dass es ein diagnostisches Assay durchführen bzw. die Ergebnisse eines diagnostischen Assays, bevorzugt vollautomatisch oder teilautomatisch, bestimmen kann, das an einer Probe, bevorzugt einer biologischen Probe, durchgeführt wird. Das in-vitro-Diagnose-Gerät kann unterschiedliche Formen und Funktionen aufweisen, beispielsweise als stand-alone-Gerät ausgeführt sein oder in Form eines integrierten in-vitro-Diagnose-Großgerätes oder im Verbund mit weiteren Geräten betrieben werden. Es ist typischerweise konfiguriert, verschiedene diagnostische Tests oder Assays auszuführen. Zur Ausführung unterschiedlicher Tests wird auf entsprechende Reagenzien, Kontrollen, Standards und Testprotokolle zurückgegriffen, die sich je nach Assayform, Assayumfang und Assayziel unterscheiden können.

Unter einer "Probe" ist im Sinne der Erfindung das Material zu verstehen, dass eine nachzuweisende Substanz (den Analyten) vermutlich enthält. Der Begriff "Probe" umfasst insbesondere biologische Flüssigkeiten von Menschen oder Tieren, wie z.B. Blut, Plasma, Serum, Sputum, Exsudat, bronchoalveoläre Lavage, Lymphflüssigkeit, Synovialflüssigkeit, Samenflüssigkeit, Vaginalschleim, Feces, Urin, Liquor, aber auch z.B. durch Homogenisation oder Zelllyse für die photometrische, bevorzugt nephelometrische Bestimmung entsprechend aufgearbeitete Gewebe- oder Zellkulturproben. Ferner können auch z.B. pflanzliche Flüssigkeiten oder Gewebe, forensische Proben, Wasser- und Abwasserproben, Nahrungsmittel, Arzneimittel als Probe dienen, die ggf. vor der Bestimmung einer entsprechenden Probenvorbehandlung zu unterziehen sind.

Ein Durchführen eines diagnostischen Assays umfasst bevorzugt die Messung der Konzentration und/oder der Aktivität von einem oder mehreren Analyten in einer Probe mittels eines quantitativen und/oder qualitativen Nachweises. Von dem Begriff des "quantitativen Nachweises" sind auch semiquantitative Methoden umfasst, die nur die ungefähre Menge, Konzentration oder Aktivität des Analyten in der Probe erfassen oder nur zu einer relativen Mengen-, Konzentrations- oder Aktivitätsangabe dienen können. Unter einem qualitativen Nachweis ist der Nachweis des Vorhandenseins des Analyten in der Probe überhaupt oder das Anzeigen, dass die Menge, Konzentration oder Aktivität des Analyten in der Probe unterhalb oder oberhalb eines bestimmten oder mehrerer bestimmter Schwellenwerte liegt, zu verstehen.

Jedes Assay hat dabei typischerweise sein eigenes Kontrollsystem, d. h. standardisiertes Kontrollmaterial/ Kalibrationsmaterial das in regelmäßigen Zeitabständen, z.B. täglich oder wöchentlich getestet wird, bevor echte Patientenproben untersucht werden können.

Die für in-vitro Assays verwendeten Reagenzien werden im Regelfall in Chargen produziert und müssen vorgegebene Sollwerte zu Konzentration, Aktivität, etc. erfüllen. Weiterhin können den Reagenzien konkret bestimmte chargenspezifisch zugewiesene Werte zugewiesen werden, die sich von Charge zu Charge ändern können und bei der Durchführung der Assays berücksichtigt werden müssen. Derartige chargenspezifische Werte sind typischerweise auf der Produktbegleitdokumentation mit der Produktverpackung angegeben und können für die Durchführung der Assays eingelesen bzw. verwendet werden. Diese Werte werden nach Eingabe in das in-vitro-Diagnose-Gerät von diesem bei Durchführung eines Assays berücksichtigt. Reagenzien ändern über bestimmte Zeiträume hinweg normalerweise ihre Eigenschaften, d.h. es kann zu erhöhter oder verringerter Reaktivität oder erhöhten oder verringerten Signalen kommen abhängig von der Lagerdauer der Reagenzien, der Charge oder anderen Faktoren. Dies wird typischerweise als dynamischer Prozess verstanden, der zu Messunterschieden von bis zu 20% führen kann. Eine Einlesung von Datenpunkten die bei der Produktion erhoben wurden, ist somit vor allem für länger gelagerte Reagenzien variabel und kann die Messergebnisse verfälschen.

Die erfindungsgemäßen in-vitro-Diagnose-Geräte sind typischerweise in einem Netzwerk mit weiteren Komponenten verbunden. Ein derartiges Netzwerk kann ein Internet- oder Intranet-basiertes Netzwerk sein. Weiterhin kann eine Verbindung des Gerätes mit weiteren Komponenten über Verbindungen mit kurzer Reichweite wie Bluetooth, WiFi, ZigBee oder ähnliches hergestellt werden. Über die Anbindung an ein Netzwerk kann das in-vitro-Diagnose-Gerät in ein System eingebunden werden und mit weiteren Komponenten des Systems verbunden werden, um einen Datenaustausch zu ermöglichen. Der Begriff "System", wie er hierin verwendet wird, bezieht sich somit sowohl auf eine Einzelanbindung eines in-vitro-Diagnose-Gerätes an ein Netzwerk mit zusätzlichen Komponenten wie bspw. einer Steuereinheit, als auch auf eine Gruppe oder Vielzahl von in-vitro-Diagnose-Geräten, welche in einem Netzwerk mit einer (oder ggf. mehreren interagierenden) Steuereinheit(en) verbunden sind. Das System kann je nach Aufbau und Konzept eine oder mehrere zusätzliche Komponenten enthalten. So können verschiedene Gerätetypen eingebunden sein, es können Datenressourcen von Reagenzien-Herstellen, Software-Herstellern, Geräte-Herstellen etc. eingebunden sein. Weiterhin können in besonderen Ausführungsformen staatliche Stellen, bspw. Gesundheitsämter, Überwachungsstellen oder Arztpraxen, Krankenhausabteilungen/-labore etc. in das System, etwa über Datenbankzugriffe eingebunden werden.

So ist in einer bevorzugten Ausführungsform ein in-vitro-Diagnose-Geräte mit einer Vielzahl von anderen in-vitro-Diagnose-Geräten verbunden, beispielsweise allen oder einem Großteil von in-vitro-Diagnose-Geräten z.B. eines bestimmten Typs oder einer bestimmten Geräteserie, bspw. in einer bestimmten Region, einer bestimmten Stadt, einem bestimmten Bundesland, einem bestimmten Land oder Kontinent oder sie können global vernetzt sein. In bevorzugten Ausführungsformen sind Geräte als Flottengeräte desselben Typs miteinander verbunden.

Es ist bevorzugt, dass innerhalb des Netzes bzw. des Systems auf sichere Datenverbindungen zurückgegriffen wird. Ein Beispiel für ein sicheres Datenverbindungskonzept, das im Rahmen der Erfindung bevorzugt ist, ist Smart Remote Services (SRS). Dabei wird eine bi-direktionale Verbindung des in-vitro-Diagnose-Gerätes zu einem SRS Portal oder Zugangangsserver etabliert und dadurch ein Standortunabhängiger Zugriff auf lokal und Server-gespeicherte Daten ermöglicht. SRS-gestützt kann z.B. die Leistung der Gerätehardware, ihre Betriebszeit oder potenzielle Probleme überwacht werden. Ebenfalls kann eine Software-basierte Wartung der Geräte durchgeführt werden. Durch die Bidirektionalität der Anbindung der in-vitro-Diagnose-Geräte in das beschriebene Netzwerk wird ein Regelkreis erzeugt, der eine justierende bzw. korrigierende Funktion auf das in-vitro-Diagnose-Gerät ausübt. Der Regelkreis ist vorzugsweise als geschlossener Regelkreis konzipiert und von Einflüssen außerhalb des sicheren Datenverbundes abgeschirmt.

Für sichere Datenverbindungen im Internet wird im Rahmen der vorliegenden Erfindung bevorzugt auf virtuelle private Netzwerke (VPN) zurückgegriffen, die von Unbeteiligten nicht eingesehen werden können.

Das in-vitro-Diagnose-Gerät ist erfindungsgemäß dazu konfiguriert, eine Abweichung eines internen Kalibrier-/Kontrollmessparameters von einem definierten Standardwert zu detektieren. Der Begriff "Kalibrier-/Kontrollmessparameter" wie hierin verwendet, bezieht sich auf alle Parameter bzw. Messwerte, die in einem in-vitro-Diagnose-Gerät im Zusammenhang mit der Durchführung eines Assays erhoben werden. Das umfasst beispielsweise Parameter bzw. Messwerte, welche mit den für die Durchführung der in-vitro-Diagnose verwendeten Assayreagenzien assoziiert sind, bspw. welche bei Benutzung des standardisierten Kontrollmaterials/Kalibrationsmaterials vor oder während der Durchführung der Assays erhoben werden. Weiterhin kann der interne Kalibrier-/Kontrollmessparameter ein Gerätesystemkomponenten-Parameter sein, d.h. Eigenschaften von bestimmten Systemkomponenten wie Optik, Spannung, Stromfluss, Temperatur, Temperaturanstieg etc. abbilden. In einer weiteren Ausführungsform werden Initialmessungen eines internen Kalibrier-/Kontrollmessparameters für die Bestimmung der Abweichung verwendet. Hierbei handelt es sich beispielsweise um Erstmessungen nach Inbetriebnahme des Gerätes, oder Messungen vor Durchführung eines ersten Assays an einem Arbeitstag oder einer Arbeitsschicht.

In einer weiteren Ausführungsform wird eine Abweichung von einer Kalibrierungskurve detektiert. Der Begriff der "Kalibrierungskurve" wie hierin verwendet, bezieht sich auf eine Kurve oder Tabelle für ein in-vitro-Diagnose-Gerät, die Parameter indirekt misst und Werte für die gewünschte Größe als Funktion der Werte einer Sensorausgabe angibt. Eine solche Kurve wird typischerweise verwendet, wenn die Kalibrierung eines in-vitro-Diagnose-Gerät von Probe zu Probe große Variation aufweist oder sich mit der Zeit oder Verwendung ändert. Die Kalibrierungskurve zeigt dabei typischerweise, wie sich das analytische Signal, z.B. mit der Konzentration von Reagenzien oder der zu messenden Substanz ändert.

Erhobene Kalibrier-/Kontrollmessparameter oder generierte Kalibrierungskurven werden erfindungsgemäß im in-vitro-Diagnose-Gerät mit festgelegten Standardwerten oder Standardkurven verglichen. Derartige Vergleiche können bevorzugt von geräteinternen Komponenten, bspw. sog. Off-set-Detektoren durchgeführt werden und auf unterschiedliche Zeiträume, z.B. Stunden, Tage, Wochen, Monate etc. projiziert werden. Die "Standardwerte", welche als Vergleichsbezug verwendet werden, umfassen beispielsweise die Chargen-abhängigen Zielwerte, technische Spezifikationen zu den Geräten, Assay-abhängige Werte etc. Diese Werte werden entweder manuell in die in-vitro-Diagnose-Geräte eingegeben oder über ein Netzwerk oder einen Kommunikationsanschluss auf die Geräte übertragen. Änderungen von Standardwerten, z.B. im Rahmen eines Chargen-Wechsels oder einer Gerätewartung, werden typischerweise im in-vitro-Diagnose-Gerät abgespeichert. Der erfindungsgemäße Ansatz sieht dabei zusätzlich die Änderung der Standardwerte über Korrekturfaktoren im hierin beschriebenen Regelkreismodell vor.

Dazu wird in einem ersten Schritt nach Detektion einer Abweichung eines Kalibrier-/Kontrollmessparameters von einem Standardwert die Übermittlung der gemessenen Differenz an eine Steuereinheit vorgenommen. Die "Steuereinheit" kann eine elektronische oder Computer-gestützte Komponente sein, die vorzugsweise über eine Netzwerk-Anbindung mit dem in-vitro-Diagnose-Gerät verbunden ist. Die Steuereinheit ist dazu konfiguriert, die Abweichung eines internen Kalibrier-/Kontrollmessparameters von einem definierten Standardwert des mindestens einen in-vitro-Diagnose-Gerätes auszuwerten. So kann die Steuereinheit insbesondere Abweichungen von einem definierten Standardwert in Abhängigkeit von verwendeten Assayreagenzien-Chargen auswerten.

Hierbei wird eine Differenz bzw. Abweichung des internen Kalibrier-/Kontrollmessparameters, der sich auf Assayreagenzien bezieht von Standardwerten, welche vom in-vitro-Diagnose-Gerät detektiert wird, an die Steuereinheit übermittelt und mit vorhandenen Daten verglichen. Der Vergleich kann bspw. mit aktuellen Daten oder historischen Daten, bspw. mit Daten, welche vor 12 h, 1, 2, 3, 4, 5, 6 Tagen, 1, 2, 3 Wochen, 1, 2, 3, 4, 5, 6, 7, 8, 9, 10, 11 Monaten, 1, 2, 3 Jahre etc. oder über den gesamten Lebenszyklus des in-vitro-Diagnose-Gerätes erhoben wurden, durchgeführt werden. Vorteilhafterweise kann der Vergleich ebenfalls mit Daten von anderen in-vitro-Diagnose-Geräten durchgeführt werden. Dabei können entweder historische Daten von diesen Geräten oder aktuelle Daten verwendet werden. Eine derartige Auswertung kann dazu benutzt werden, Änderungsmuster bzw. Veränderungstrends oder Verschiebungen der Assayleistung oder dynamische Prozesse in einer Vielzahl von in-vitro-Diagnose-Geräten zu erkennen.

Zusätzlich oder alternativ wird die Abweichung von einem definierten Standardwert in Abhängigkeit von Werten, welche von Gerätesystemkomponenten erhoben bzw. übermittelt werden, von der Steuereinheit ausgewertet. Hier können aktuelle und historische Werte wie oben genannt desselben Gerätes oder einer Vielzahl von Geräten ausgewertet werden.

Zusätzlich oder alternativ wird die Abweichung von einem definierten Standardwert in Abhängigkeit von Werten, welche hinsichtlich des Gerätetyps erhoben bzw. übermittelt werden, von der Steuereinheit ausgewertet. Hier können aktuelle und historische Werte von allen oder einer Vielzahl von Geräten desselben Typs, optional desselben Baujahres, desselben Wartungszeitraums etc. ausgewertet werden.

Die Auswertung der Abweichungen in Abhängigkeit von Gerätesystemkomponenten oder Gerätetypen erlaubt es, Systemvariabilitäten bei Geräten zu identifizieren, die auf Gerätkomponenten zurückzuführen sind, oder welche durch den Gerätetyp beeinflusst sind. Dadurch ist es möglich, einzelne Geräte oder Gerätetypen oder -gruppen zu identifizieren, welche technische, d.h. bspw. Hardware-Probleme aufweisen. Bei Reproduzierbarkeit der Probleme kann entweder mit einer (justierten) Modifizierung der Standardwerte reagiert werden, oder es können alternative Handlungen vorgeschlagen werden. Das könnte bspw. eine Wartung des Gerätes oder einer Gruppe von Geräten, der Austausch von Gerätekomponenten, das Aufspielen einer neuen Software, die Verwendung besondere Reagenzien oder ähnliches sein. Weiterhin kann eine Warnung an den Gerätenutzer erstellt werden, die Assayergebnisse nicht für medizinische Zwecke zu benutzen bzw. einen Test mit einem anderen Gerät zu wiederholen.

In einer weiteren Ausführungsform der Erfindung werden von den in-vitro-Diagnose-Geräten nicht nur interne Kalibrier-/Kontrollmessparameter, welche sich auf Assays und Gerätefunktionen beziehen, an eine Steuereinheit übermittelt, sondern auch konkrete diagnostische Messergebnisse, welche mit Patientenproben durch die Assays erhalten wurden. Diese Messergebnisse, die vorzugsweise datenschutzgerecht über verschlüsselte bzw. sichere Verbindungen übermittelt werden, können von der Steuereinheit hinsichtlich vorliegender Änderungsmuster bzw. Veränderungstrends oder Verschiebungen der Assayleistung oder dynamische Prozesse in einer Vielzahl von Assays eines in-vitro-Diagnose-Gerätes oder einer Vielzahl von in-vitro-Diagnose-Geräten ausgewertet werden. Vorteilhafterweise ist die Anzahl von Messergebnissen, die mit Patientenproben erhalten werden, erheblich höher (Faktor 100 bis 1000) als die Anzahl der erhaltenen Kalibrier-/Kontrollmessparameterwerte. Dadurch ist es möglich, Verschiebungstrend oder Änderungsmuster schneller und genauer zu detektieren und die Systemleistung zu steigern, da davon auszugehen ist, dass allgemeine Verteilungsmuster von Patientenergebnissen, z.B. physiologische und pathologische Ergebnisse, im Wesentlichen gleichbleiben, wenn eine statistisch signifikante Anzahl von in-vitro-Diagnose-Geräten ausgewertet werden kann und für die Datenanalyse berücksichtigt wird. In besonderen Ausführungsformen können die Daten einer mit einem Assay, d.h. einem "Patientenassay", gemessenen Patientenprobe in einem mit der Steuereinheit assoziierten Datenspeicher oder einer Datenbank abgelegt werden, um sie einer weiteren Analyse zugänglich zu machen. Weiterhin können die aus Patientenassays erhaltenen Daten ebenfalls historisch gespeichert bzw. ausgewertet werden, d.h. es können Daten aus unterschiedlichen Zeiträumen gespeichert, verglichen, ausgewertet etc. werden und damit ggf. ein Veränderungsmuster detektiert werden. Durch die Auswertung können sowohl gerätespezifische Abweichungen, welche bspw. auf Hardwarekomponenten zurückzuführen sind, als auch Assayreagenz-Chargen-abhängige Abweichungen identifiziert werden.

In Ausführungsformen der Erfindung ist die Steuereinheit dazu konfiguriert, die detektierten Abweichungen einer Vielzahl von in-vitro-Diagnose-Geräten zu empfangen und auszuwerten. Die Steuereinheit ist in bevorzugten Ausführungsformen als Datenanalyse-Einheit konfiguriert, d.h. sie nutzt computerbasierte Datenauswerte-Techniken, bspw. KI-gestützte Auswertetechniken, Data Mining-Techniken etc. Sie ist in weiteren bevorzugten Ausführungsformen mit einer oder mehreren Datenbank(en) verbunden und kann aus dieser/diesen Werte und Daten entnehmen und für eine Auswertung der übermittelten Differenzen der Kalibrier-/Kontrollmessparameter oder Kalibrationskurve von den Standardwerten nutzen. Die Datenbank kann beispielsweise Chargen-assoziierte Daten, z.B. Zielwerte oder initiale Sollwerte für jedes in-vitro-Diagnose-Gerät bereitstellen, Assay-assoziierte Daten vorhalten, Auswerteergebnisse von anderen mit der Steuereinheit verbundenen Geräten enthalten oder Warnhinweise von Geräteherstellern oder anderen in-vitro-Diagnose-Geräten bspw. zu mechanischen oder technischen Problemen der Geräte verfügbar machen. Weiterhin kann die Datenbank Daten zu Patientenassays wie oben beschrieben enthalten, z.B. historische oder aktuelle Daten von einem, mehreren oder einer Vielzahl von in-vitro-Diagnose-Gerät(en) bzw. einer Vielzahl von durchgeführten Assays, ggf. unterschiedlichen Assays, welche mit verschiedenen Assayreagenzien-Chargen durchgeführt wurden, etc.

Weiterhin kann die Steuereinheit Daten und Auswerteergebnisse in der/den Datenbank(en) ablegen und für andere oder zukünftige Auswertevorgänge oder andere Zwecke verfügbar machen.

Nach Auswertung der an die Steuereinheit übermittelten Differenzen der Kalibrier-/Kontrollmessparameter oder Kalibrierungskurven von Standardwerten wird von der Steuereinheit eine Modifizierung des Standardwertes vorgenommen. Die Steuereinheit des erfindungsgemäßen Systems ist entsprechend konfiguriert, den Standardwert zu modifizieren und an das in-vitro-Diagnose-Gerät zu übermitteln. Die "Modifizierung" kann dabei eine Senkung oder Erhöhung des Standardwertes sein, in Abhängigkeit von den übermittelten Differenzen. Modifizierte, d.h. erhöhte oder gesenkte Standardwerte werden anschließend an das in-vitro-Diagnose-Gerät, das die Differenz gemeldet hat, zurück übermittelt. Diese Übermittlung kann in bestimmten Ausführungsformen über ein Stellglied, wie in Fig. 1 dargestellt, erfolgen. Das in-vitro-Diagnose-Gerät führt in Folge, d.h. nach Übermittlung, alle weiteren Assays oder Tests auf Basis des/der modifizierten Standardwerte(s) durch bis ggf. eine erneute Modifizierung des Standardwertes durch die Steuereinheit erfolgt.

Die Modifizierung der Standardwerte kann in besonderen Ausführungsformen über ein Schwellwertverfahren spezifisch gesteuert werden. Dabei kann festlegt werden, ab welchem Wert, welcher Anzahl von Meldungen und welcher Streuung von Werten (z.B. über die Festlegung einer Standardabweichung, und/oder einer absoluten Anzahl von Messwerten) eine Modifizierung erfolgen soll. Weiterhin kann ausgewählt werden, ob eine spezifische Modifikation eines in-vitro-Diagnose-Gerätes übermittelt wird, und/oder ob die Modifikation an eine Gruppe von Geräten oder die Gesamtheit der Geräte übermittelt wird.

Die Modifizierung des Standardwertes wird bevorzugt durch die Generierung eines Korrekturfaktors für den Standardwert vorgenommen. Der Begriff "Korrekturfaktor" wie er hierin verwendet wird, bezieht sich auf eine Änderungsanweisung für den auf einem in-vitro-Diagnose-Gerät verwendeten Standardwert, z.B. bzgl. der Assaykalibration, oder einen Gerätewert. Diese Änderungsanweisung kann bspw. eine Verminderung des Wertes oder eine Erhöhung des Wertes erzeugen. Dies kann über absolute Wertangaben, Formeln, oder prozentuale Änderungsangaben erfolgen
Der Korrekturfaktor kann sich aus unterschiedlichen Teilkorrekturfaktoren oder einer Gruppe von Korrekturfaktoren zusammensetzen, welche ggf. einzeln übermittelt und der betroffenen Komponenten des Gerätes separat zugeordnet werden können und unterschiedliche Abweichungsszenarien in einem in-vitro-Diagnose-Gerät betreffen.

So kann ein Standardwert durch einen Korrekturfaktor modifiziert werden der auf Basis einer individuellen Abweichung eines in-vitro-Diagnose-Gerätes von einem Standardwert bestimmt wird. Diese Abweichung kann typischerweise die technische Funktion des Gerätes betreffen, aber auch den Standort des Gerätes, die Umgebungsvariablen wie Temperatur, Luftfeuchtigkeit, Erschütterungen, Sonneneinstrahlung, bedienendes Personal, Tageszeiten der Assaydurchführung etc. Entsprechende Abweichungen und ggf. zusätzliche Parameter können vom Gerät selbst ermittelt werden oder alternativ über zusätzliche externe Parameterermittlung am Standort erhalten werden, z.B. im Falle des Fehlens von Sensoren am Gerät.

Weiterhin kann ein Standardwert durch einen Korrekturfaktor modifiziert werden der auf Basis einer Assayreagenzien-Chargen-abhängigen Abweichung eines oder vorzugsweise mehrerer in-vitro-Diagnose-Geräte von einem Standardwert bestimmt wird. Eine derartige Abweichung kann, wie oben ausgeführt, ein Veränderungsmuster über den Lebenszyklus einer Charge bzw. über eine Charge, welche auf mehreren in-vitro-Diagnose-Geräten zum Einsatz kommt, sein. Typischerweise wird die Abweichung über festgelegte Zeiträume hinweg festgestellt und kann sich dynamisch ändern. Ein Korrekturfaktor muss entsprechend nachgeführt und an die aktuelle Abweichung angepasst werden.

Weiterhin kann ein Standardwert durch einen Korrekturfaktor modifiziert werden, der auf Basis einer Abweichung von Messdaten aus Patientenassays von früheren Messdaten aus Patientenassays, Kontrollen und/oder Kalibrationen bestimmt wird. Derartige Abweichungen können vorzugsweise, wie oben ausgeführt, über die Auswertung einer Vielzahl von Patietenassaydaten an einem Standort, oder mehreren, vorzugweise vielen Standorten, d.h. von Assays, die mit einer Vielzahl von in-vitro-Diagnose-Geräten durchgeführt wurden, erkannt werden. Vorzugweise umfasst die Auswertung der Patiententenassaydaten einen Vergleich mit weiteren Auswerteresultaten, z.B. den Assayreagenzien-Abweichungen und den Geräte-spezifischen Abweichungen um eine Zuordnung der Abweichung zu bestimmten Problembereichen zu erleichtern.

Weiterhin kann ein Standardwert durch einen Korrekturfaktor modifiziert werden, der auf Basis einer Gerätetyp-abhängigen Abweichung mehrerer in-vitro-Diagnose-Geräte von einem Standardwert bestimmt wird. Die Gerätetyp-abhängige Abweichung ist typischerweise eine durch spezifische Komponenten oder Eigenschaften von in-vitro-Diagnose-Geräten verursachte Variabilität, die sich in allen oder der Mehrzahl von in-vitro-Diagnose-Geräten eines bestimmten Typs, Baujahres, Herstellungsortes, oder Produktionsstandortes etc. identifizieren lässt. Erkannte Muster im Abweichungsverhalten können durch Korrekturfaktoren für alle entsprechenden Geräte ausgeglichen werden.

Weiterhin kann ein Standardwert durch einen Korrekturfaktor modifiziert werden, der auf Basis einer Gerätesystemkomponenten-abhängigen Abweichung mehrerer in-vitro-Diagnose-Geräte von einem Standardwert bestimmt wird. Gerätesystemkomponenten können mittels Hardware-Überprüfung oder technische Messungen von Parametern wie Optik, Spannung, Stromfluss, Temperatur etc. bzw. in Form von Geräteselbsttests auf Abweichungen von Standardwerten überprüft werden. Derartige Abweichungen können erätespezifisch sein, d.h. nur an einem bestimmten Gerät auftreten oder in einer Gruppe von Geräten auftreten. Entsprechende Korrekturfaktoren werden an das individuelle Gerät bzw. die Gruppe von Geräten übermittelt. Die Übermittlung eines individuellen Korrekturfaktors kann in besonderen Ausführungsformen von der Überschreitung/Unterschreitung von vorgegebenen Schwellenwerten abhängig gemacht werden.

Allgemein kann eine individuelle Abweichung eines der hierin beschriebenen Parameter von Standardwerten ein Signal für eine Fehlfunktion des spezifischen Gerätes oder der spezifisch eingesetzten Reagenzien etc. sein. In Fällen, in denen eine individuelle Abweichung aufgetreten ist, die sich nicht als Veränderungsmuster in anderen in-vitro-Diagnose-Geräten zeigt, wird vorzugsweise ein Warnhinweis statt eines Korrekturfaktors an das in-vitro-Diagnose-Gerät und/oder den zuständigen Operator übermittelt.

Weiterhin kann ein Standardwert durch einen Korrekturfaktor modifiziert werden, der auf Basis einer Abweichung der Mess- bzw. Kalibrier-/Kontrollmessparametern von Mess- bzw. Kalibrier-/Kontrollmessparametern in einer Vielzahl von in-vitro-Diagnose-Geräten bestimmt wird. Die Abweichung von Kalibrier-/Kontrollmessparametern in einer Vielzahl von in-vitro-Diagnose-Geräten kann von einer Steuereinheit ausgewertet werden, welche mit einer Vielzahl der Geräte verbunden ist. Durch einen Multiplikationseffekt aufgrund statistisch auswertbarer Datenmengen kann ein Abweichungstrend schneller und genauer bestimmt werden. Ein Korrekturfaktor kann entsprechend feinjustiert an alle Geräte der analysierten Gruppe übermittelt werden. Dadurch wird ein sehr effizienter geschlossener Regelkreis etabliert, der die manuelle bzw. individuelle Korrektur von entsprechenden Standardwerten überflüssig macht und gleichzeitig ein zeitnahes Monitoring erlaubt, das Fehler und Wertabweichungen effizient vermeidet.

Weiterhin kann ein Standardwert durch einen Korrekturfaktor modifiziert werden, der sich aus einer Kombination einer Gerätesystemkomponenten-abhängigen Abweichung, einer Assayreagenzien-Chargen-abhängigen Abweichung und/oder einer Abweichung von Messdaten aus Patientenassays ergibt. In weiteren Ausführungsformen kann dieser Korrekturfaktor durch Kombination mit weiteren Abweichungen, wie oben ausgeführt, bestimmt werden. Der Korrekturfaktor kann dabei entweder als Einzelkorrekturfaktor an das in-vitro-Diagnose-Gerät übermittelt werden und von der Gerätesoftware so umgesetzt werden, dass Messvariationen in allen betroffenen Bereichen ausgeglichen werden, oder der Korrekturfaktor kann als Gruppe von Teilkorrekturfaktoren für die jeweils abweichenden Komponenten übermittelt werden.

In weiteren bevorzugten Ausführungsformen der Erfindung ist das mindestens eine in-vitro-Diagnose-Gerät dazu konfiguriert, die Abweichung eines internen Kalibrier-/Kontrollmessparameters wie oben definiert von einem definierten Standardwert in regelmäßigen Zeitabständen zu bestimmen. Diese Zeitabstände können von den zu messenden Parametern, dem Gerätetyp, dem Assaytyp, den Reagenzien, dem Reagenzienalter oder anderen Faktoren abhängen. Zum Beispiel kann eine Bestimmung einmal pro Stunde, einmal pro 12 h, pro Tag, pro 2, 3, 4, 5, 6 Tage, pro Woche, pro 2, 3 Wochen, pro Monat, pro 2, 3, 4, 5, 6, 7, 8, 9, 10, 11 Monate, pro Jahr etc. oder über den Lebenszyklus des in-vitro-Diagnose-Gerätes, der Assayreagenzien, oder einer Systemkomponente oder eines Teils des Lebenszyklus durchgeführt werden. Weiterhin kann die Bestimmung einmal pro Arbeitsschicht, bei jedem Bedienerwechsel, nach Durchführung einer bestimmten Anzahl von Assays, z.B. nach jedem 10., 20., 30., 40., 50., 100., 500. Assay etc. vorgenommen werden. Die Durchführung der Bestimmung kann vom in-vitro-Diagnose-Gerät selbst angestoßen werden, oder über die Steuereinheit eingeleitet werden.

In einem weiteren Aspekt bezieht sich die vorliegende Erfindung auf ein Verfahren zur Modifizierung eines definierten Standardwertes eines internen Kalibrier-/Kontrollmessparameters mindestens eines in-vitro-Diagnose-Gerätes, wobei der im in-vitro-Diagnose-Gerät gemessene interne Kalibrier-/Kontrollmessparameter eine Abweichung von dem Standardwert aufweist. Das Verfahren umfasst dabei die Weiterleitung der Abweichung an mindestens eine Steuereinheit, vorzugsweise wie hierin definiert, die Auswertung der Abweichung in der Steuereinheit und die Übermittlung eines auf Basis der Abweichung modifizierten Standardwertes an das in-vitro-Diagnose-Gerät, das die Abweichung detektiert hat.

Es werden zusätzlich Messdaten eines Patientenassays an die Steuereinheit weitergeleitet, wie im Kontext des erfindungsgemäßen Systems dargestellt.

Ferner wird die Abweichung von Initialmessungen des internen Kalibrier-/Kontrollmessparameters und/oder die Abweichung des internen Kalibrier-/Kontrollmessparameters von einem definierten Standardwert in definierten Zeitabständen weitergeleitet. Diese Weiterleitungen finden einmal pro Stunde, pro 12 h, pro Tag, pro 2, 3, 4, 5, 6 Tage, pro Woche, pro 2, 3 Wochen, pro Monat, pro 2, 3, 4, 5, 6, 7, 8, 9, 10, 11 Monate, pro Jahr etc. oder über den Lebenszyklus des vitro-Diagnose-Gerätes, der Assayreagenzien, oder einer Systemkomponente, oder eines Teils des Lebenszyklus stattfinden.

Das erfindungsgemäße Verfahren umfasst in einem spezifischen Schritt die Übermittlung und Auswertung von Abweichungen interner Kalibrier-/Kontrollmessparameter, die mit der Durchführung der in-vitro-Diagnose verwendeten Assayreagenzien assoziiert sind, wie hierin definiert oder von Gerätesystemkomponenten-Parametern, wie hierin definiert. Weiterhin umfasst ist die Übermittlung und Auswertung von Abweichungen von einem definierten Standardwert in Abhängigkeit von verwendeten Assayreagenzien-Chargen, Gerätesystemkomponenten, und/oder dem Gerätetyp, wie hierin definiert. Vorzugsweise werden hierbei interne Kalibrier-/Kontrollmessparameter bzw. deren Abweichungen einer Vielzahl von in-vitro-Diagnose-Geräten umfasst.

In einer besonders bevorzugten Ausführungsform des erfindungsgemäßen Verfahrens wird ein Standardwert, wie hierin definiert, durch einen Korrekturfaktor modifiziert. Dieser Korrekturfaktor wird, wie oben im Detail ausgeführt, auf Basis (i) einer individuellen Abweichung eines in-vitro-Diagnose-Gerätes von einem Standardwert, (ii) einer Assayreagenzien-Chargen-abhängigen Abweichung mehrerer in-vitro-Diagnose-Geräte von einem Standardwert, (iii) einer Abweichung von Messdaten aus Patientenassays von früheren Messdaten aus Patientenassays, (iv) einer Gerätetyp-abhängigen Abweichung mehrerer in-vitro-Diagnose-Geräte von einem Standardwert, (v) einer Gerätesystemkomponenten-abhängigen Abweichung mehrerer in-vitro-Diagnose-Geräte von einem Standardwert, (vi) einer Abweichung der Mess- bzw. Kalibrier-/Kontrollmessparameter von Mess- bzw. Kalibrier-/Kontrollmessparametern in einer Vielzahl von in-vitro-Diagnose-Geräten und/oder (vii) einer Abweichung, die sich aus einer Kombination einer Gerätesystemkomponenten-abhängigen Abweichung, einer Assayreagenzien-Chargen-abhängigen Abweichung und/oder einer Abweichung von Messdaten aus Patientenassays ergibt, bestimmt.

Die Beispiele und Figuren dienen der Veranschaulichung. Es versteht sich daher, dass die Beispiele und Figuren nicht als einschränkend ausgelegt werden sollen. Der Fachmann kann sich weitere Modifikationen der hier dargelegten Prinzipien klar vorstellen.

### BEISPIELE

### BEISPIEL 1

Die folgende Darstellung bezieht sich auf ein aPTT Assay mit einer ersten Reagenziencharge (Lot #1). Diesem Assay wurde dabei am Ende der Fertigung ein Lot-spezifischer Wert zugeordnet, bei dem der Assay für eine standardisierte, physiologische Probe einen oberen Normalwert anzeigt (31 Sekunden) .

Aus den erhaltenen Messdaten aller In-vitro-Diagnose-Systeme, die diesen Assay und Lot nutzen und Kontrollmaterialien verwenden, die eigentlich reproduzierbar gleiche Werte liefern sollten, ergab sich, dass die Mittelwerte der Ergebnisse über einen definierten Zeitraum, 3 Monate, kontinuierlich angestiegen sind.

Der verwendete Off-set Detektor zeigte über einen Zeitraum von 3 Monaten einen Anstieg von 2,7 Sekunden an.

Dies würde bei weiterem linearem Verlauf des Anstiegs bei einer Laufzeit von 18 Monaten zu einer künstlichen, fälschlichen Ergebniserhöhung von ursprünglich 31 Sekunden um 2,7 Sekunden auf 33,7 Sekunden bedeuten.

Der Off-set Detektor berechnete die Differenz, und ein Steuerelement ermittelte daraus einen sich daraus ergebenden Korrekturfaktor. Damit konnte die Assay-Applikation trotz erhöhter Signalwerte korrekte Messwerte anzeigen und dem Labor und Mediziner zur Verfügung stellen (siehe auch Fig. 3).

## Patentansprüche

1. System, umfassend:
- mindestens ein in-vitro-Diagnose-Gerät (1), das dazu konfiguriert ist, ein diagnostisches Assay (2) durchzuführen, wobei das in-vitro-Diagnose-Gerät dazu konfiguriert ist, eine Abweichung eines internen Kalibrier-/Kontrollmessparameters von einem definierten Standardwert, oder einer Kalibrierungskurve zu detektieren und an eine Steuereinheit (3) weiterzuleiten;
- mindestens eine Steuereinheit (3), die mit dem mindestens einen in-vitro-Diagnose-Gerät (1) bi-direktional verbunden ist und dazu konfiguriert ist, die Abweichung eines internen Kalibrier-/Kontrollmessparameters von einem definierten Standardwert des mindestens einen in-vitro-Diagnose-Gerätes (1) auszuwerten, wobei die Steuereinheit (3) für die Auswertung zusätzlich auf Daten aus einer Datenbank zugreift;
wobei die Steuereinheit (3) dazu konfiguriert ist, den Standardwert, für den ein abweichender interner Kalibrier-/Kontrollmessparameter detektiert wurde, zu modifizieren und den modifizierten Standardwert an das in-vitro-Diagnose-Gerät (1) zu übermitteln, das die Abweichung detektiert hat, um die Bereitstellung eines gleichbleibenden Ergebniswertes durch das in-vitro-Diagnose-Gerät (1) zu ermöglichen,
**dadurch gekennzeichnet, dass**
die Steuereinheit (3) dazu konfiguriert ist, Abweichungen von einem definierten Standardwert in Abhängigkeit von verwendeten Assayreagenzien-Chargen, den Gerätesystemkomponenten oder dem Gerätetyp auszuwerten,
wobei die Auswertung einen Vergleich der Abweichungen eines internen Kalibrier-/Kontrollmessparameters und von Messdaten von Patientenassays einer Vielzahl von in-vitro-Diagnose-Geräten umfasst.

2. System nach Anspruch 1, wobei der interne Kalibrier-/Kontrollmessparameter ein Parameter ist, der mit den für die Durchführung der in-vitro-Diagnose verwendeten Assayreagenzien assoziiert ist.

3. System nach Anspruch 1, wobei der interne Kalibrier-/Kontrollmessparameter ein Gerätesystemkomponenten-Parameter ist.

4. System nach einem der Ansprüche 1 bis 3, wobei das mindestens eine in-vitro-Diagnose-Gerät (1) dazu konfiguriert ist, zusätzlich Messdaten einer mit einem Assay gemessenen Patientenprobe (Patientenassay) an die Steuereinheit (3) weiterzuleiten.

5. System nach Anspruch 4, wobei die Steuereinheit (3) zusätzlich dazu konfiguriert ist, die Messdaten des Patientenassays anhand von früheren Messdaten aus Patientenassays, Kontrollen und/oder Kalibrationen auszuwerten.

6. System nach einem der Ansprüche 1 bis 5, wobei die Steuereinheit (3) dazu konfiguriert ist, auf eine Datenbank mit Daten zu den mit den Assayreagenzien assoziierten Mess- bzw. Kalibrier-/Kontrollmessparametern und/oder mit Daten zu den Gerätesystemkomponenten-Parametern und/oder mit Daten zu den Patientenassays zuzugreifen.

7. System nach einem der Ansprüche 4 bis 6, wobei der Standardwert durch einen Korrekturfaktor modifiziert wird, der auf Basis (i) einer individuellen Abweichung eines in-vitro-Diagnose-Gerätes von einem Standardwert, (ii) einer Assayreagenzien-Chargen-abhängigen Abweichung mehrerer in-vitro-Diagnose-Geräte von einem Standardwert, (iii) einer Abweichung von Messdaten aus Patientenassays von früheren Messdaten aus Patientenassays, (iv) einer Gerätetyp-abhängigen Abweichung mehrerer in-vitro-Diagnose-Geräte von einem Standardwert, (v) einer Gerätesystemkomponenten-abhängigen Abweichung mehrerer in-vitro-Diagnose-Geräte von einem Standardwert, (vi) einer Abweichung der Mess- bzw. Kalibrier-/Kontrollmessparametern von Mess- bzw. Kalibrier-/Kontrollmessparametern in einer Vielzahl von in-vitro-Diagnose-Geräten und/oder (vii) einer Kombination einer Gerätesystemkomponenten-abhängigen Abweichung, einer Assayreagenzien-Chargen-abhängigen Abweichung und/oder einer Abweichung von Messdaten aus Patientenassays bestimmt wird.

8. System nach einem der Ansprüche 1 bis 7, wobei das mindestens eine in-vitro-Diagnose-Gerät (1) dazu konfiguriert ist, die Abweichung eines internen Kalibrier-/Kontrollmessparameters von einem definierten Standardwert einmal pro Stunde, pro 12 h, pro Tag, pro 2, 3, 4, 5, 6 Tage, pro Woche, pro 2, 3 Wochen, pro Monat, pro 2, 3, 4, 5, 6, 7, 8, 9, 10, 11 Monate, pro Jahr oder über den Lebenszyklus des in-vitro-Diagnose-Gerätes (1), der Assayreagenzien oder einer Systemkomponente oder eines Teils des Lebenszyklus zu detektieren und an die Steuereinheit (3) weiterzuleiten.

9. Verfahren zur Modifizierung eines definierten Standardwertes eines internen Kalibrier-/Kontrollmessparameters mindestens eines in-vitro-Diagnose-Gerätes (1), wobei der im in-vitro-Diagnose-Gerät (1) gemessene interne Kalibrier-/Kontrollmessparameter eine Abweichung von dem Standardwert aufweist, umfassend die Weiterleitung der Abweichung an mindestens eine Steuereinheit (3), die Auswertung der Abweichung in der Steuereinheit (3) und die Übermittlung eines auf Basis der Abweichung modifizierten Standardwertes an das in-vitro-Diagnose-Gerät (1), das die Abweichung detektiert hat, wobei zusätzlich Messdaten eines Patientenassays an die Steuereinheit (3) weitergeleitet werden, und wobei bevorzugt die Abweichung von Initialmessungen des internen Kalibrier-/Kontrollmessparameters, und weiter bevorzugt die Abweichung des internen Kalibrier-/Kontrollmessparameters von einem definierten Standardwert einmal pro Stunde, pro 12 h, pro Tag, pro 2, 3, 4, 5, 6 Tage, pro Woche, pro 2, 3 Wochen, pro Monat, pro 2, 3, 4, 5, 6, 7, 8, 9, 10, 11 Monate, pro Jahr oder über den Lebenszyklus des in-vitro-Diagnose-Gerätes, der Assayreagenzien, oder einer Systemkomponente oder eines Teils des Lebenszyklus detektiert und weitergeleitet wird, **dadurch gekennzeichnet, dass** die Auswertung der Abweichung von einem definierten Standardwert in Abhängigkeit von verwendeten Assayreagenzien-Chargen, den Gerätesystemkomponenten, und/oder dem Gerätetyp durchgeführt wird, wobei die Auswertung einen Vergleich der Abweichungen eines internen Kalibrier-/Kontrollmessparameters einer Vielzahl von in-vitro-Diagnose-Geräten umfasst.

10. Verfahren nach Anspruch 9, wobei der interne Kalibrier-/Kontrollmessparameter ein Parameter ist, der mit den für die Durchführung der in-vitro-Diagnose verwendeten Assayreagenzien assoziiert ist, oder ein Gerätesystemkomponenten-Parameter ist.

11. Verfahren nach einem der Ansprüche 9 und 10, wobei der Standardwert durch einen Korrekturfaktor modifiziert wird, der auf Basis (i) einer individuellen Abweichung eines in-vitro-Diagnose-Gerätes von einem Standardwert, (ii) einer Assayreagenzien-Chargen-abhängigen Abweichung mehrerer in-vitro-Diagnose-Geräte von einem Standardwert, (iii) einer Abweichung von Messdaten aus Patientenassays von früheren Messdaten aus Patientenassays, (iv) einer Gerätetyp-abhängigen Abweichung mehrerer in-vitro-Diagnose-Geräte von einem Standardwert, (v) einer Gerätesystemkomponenten-abhängigen Abweichung mehrerer in-vitro-Diagnose-Geräte von einem Standardwert, (vi) einer Abweichung der Mess- bzw. Kalibrier-/Kontrollmessparametern von Mess- bzw. Kalibrier-/Kontrollmessparametern in einer Vielzahl von in-vitro-Diagnose-Geräten und/oder (vii) einer Kombination einer Gerätesystemkomponenten-abhängigen Abweichung, einer Assayreagenzien-Chargen-abhängigen Abweichung und/oder einer Abweichung von Messdaten aus Patientenassays bestimmt wird.

## Claims

1. System, comprising:
- at least one in-vitro diagnosis device (1), which is configured to carry out a diagnostic assay (2), the in-vitro diagnosis device being configured to detect a deviation of an internal calibration/control measurement parameter from a defined standard value, or a calibration curve, and forward it to a control unit (3);
- at least one control unit (3), which is bidirectionally connected to the at least one in-vitro diagnosis device (1) and is configured to evaluate the deviation of an internal calibration/control measurement parameter from a defined standard value of the at least one in-vitro diagnosis device (1), the control unit (3) additionally accessing data from a database for the evaluation;
wherein the control unit (3) is configured to modify the standard value, for which a deviating internal calibration/control measurement parameter has been detected, and to transmit the modified standard value to the in-vitro diagnosis device (1) that detected the deviation, in order to make it possible to provide a consistent result value by the in-vitro diagnosis device (1),
**characterized in that**
the control unit (3) is configured to evaluate deviations from a defined standard value as a function of assay reagent batches used, the device system components, or the device type,
wherein the evaluation comprises a comparison of the deviations of an internal calibration/control measurement parameter and measurement data of patient assays of a multiplicity of in-vitro diagnosis devices.

2. System according to Claim 1, wherein the internal calibration/control measurement parameter is a parameter that is associated with the assay reagents used for carrying out the in-vitro diagnosis.

3. System according to Claim 1, wherein the internal calibration/control measurement parameter is a device system component parameter.

4. System according to one of Claims 1 to 3, wherein the at least one in-vitro diagnosis device (1) is configured additionally to forward measurement data of a patient sample measured with an assay (patient assay) to the control unit (3).

5. System according to Claim 4, wherein the control unit (3) is additionally configured to evaluate the measurement data of the patient assay with the aid of previous measurement data from patient assays, controls and/or calibrations.

6. System according to one of Claims 1 to 5, wherein the control unit (3) is configured to access a database containing data relating to the measurement or calibration/control measurement parameters associated with the assay reagents and/or containing data relating to the device system component parameters and/or containing data relating to the patient assays.

7. System according to one of Claims 4 to 6, wherein the standard value is modified by a correction factor that is determined on the basis of (i) an individual deviation of an in-vitro diagnosis device from a standard value, (ii) an assay reagent batch-dependent deviation of a plurality of in-vitro diagnosis devices from a standard value, (iii) a deviation of measurement data from patient assays from previous measurement data from patient assays, (iv) a device type-dependent deviation of a plurality of in-vitro diagnosis devices from a standard value, (v) a device system component-dependent deviation of a plurality of in-vitro diagnosis devices from a standard value, (vi) a deviation of the measurement or calibration/control measurement parameters from measurement or calibration/control measurement parameters in a multiplicity of in-vitro diagnosis devices and/or (vii) a combination of a device system component-dependent deviation, an assay reagent batch-dependent deviation and/or a deviation of measurement data from patient assays.

8. System according to one of Claims 1 to 7, wherein the at least one in-vitro diagnosis device (1) is configured to detect the deviation of an internal calibration/control measurement parameter from a defined standard value once per hour, per 12 h, per day, per 2, 3, 4, 5, 6 days, per week, per 2, 3 weeks, per month, per 2, 3, 4, 5, 6, 7, 8, 9, 10, 11 months, per year or over the life cycle of the in-vitro diagnosis device (1), the assay reagents or a system component or a part of the life cycle, and forward it to the control unit (3).

9. Method for modifying a defined standard value of an internal calibration/control measurement parameter of at least one in-vitro diagnosis device (1), wherein the internal calibration/control measurement parameter measured in the in-vitro diagnosis device (1) has a deviation from the standard value, comprising the forwarding of the deviation to at least one control unit (3), the evaluation of the deviation in the control unit (3) and the transmission of a standard value modified on the basis of the deviation to the in-vitro diagnosis device (1) that detected the deviation, wherein measurement data of a patient assay are additionally forwarded to the control unit (3), and wherein preferably the deviation from initial measurements of the internal calibration/control measurement parameter, and more preferably the deviation of the internal calibration/control measurement parameter from a defined standard value, is detected and forwarded once per hour, per 12 h, per day, per 2, 3, 4, 5, 6 days, per week, per 2, 3 weeks, per month, per 2, 3, 4, 5, 6, 7, 8, 9, 10, 11 months, per year or over the life cycle of the in-vitro diagnosis device, the assay reagents or a system component or a part of the life cycle, **characterized in that** the evaluation of the deviation from a defined standard value is performed as a function of assay reagent batches used, the device system components, and/or the device type, wherein the evaluation comprises a comparison of the deviations of an internal calibration/control measurement parameter of a multiplicity of in-vitro diagnosis devices.

10. Method according to Claim 9, wherein the internal calibration/control measurement parameter is a parameter that is associated with the assay reagents used for carrying out the in-vitro diagnosis, or is a device system component parameter.

11. Method according to one of Claims 9 and 10, wherein the standard value is modified by a correction factor that is determined on the basis of (i) an individual deviation of an in-vitro diagnosis device from a standard value, (ii) an assay reagent batch-dependent deviation of a plurality of in-vitro diagnosis devices from a standard value, (iii) a deviation of measurement data from patient assays from previous measurement data from patient assays, (iv) a device type-dependent deviation of a plurality of in-vitro diagnosis devices from a standard value, (v) a device system component-dependent deviation of a plurality of in-vitro diagnosis devices from a standard value, (vi) a deviation of the measurement or calibration/control measurement parameters from measurement or calibration/control measurement parameters in a multiplicity of in-vitro diagnosis devices and/or (vii) a combination of a device system component-dependent deviation, an assay reagent batch-dependent deviation and/or a deviation of measurement data from patient assays.

## Revendications

1. Système, comprenant :
- au moins un appareil (1) de diagnostic in vitro, qui est configuré pour effectuer un essai (2) de diagnostic, dans lequel l'appareil de diagnostic in vitro est configuré pour détecter un écart d'un paramètre interne de mesure d'étalonnage / contrôle à une valeur normalisée définie ou à une courbe d'étalonnage et de l'acheminer à une unité (3) de commande ;
- au moins une unité (3) de commande, qui est reliée bidirectionnellement au au moins un appareil (1) de diagnostic in vitro et qui est configurée pour évaluer l'écart d'un paramètre interne de mesure d'étalonnage / contrôle à une valeur normalisée définie du au moins un appareil (1) de diagnostic in vitro, dans lequel l'unité (3) de commande accède pour l'évaluation supplémentairement à des données dans une base de données ;
dans lequel l'unité (3) de commande est configurée pour modifier la valeur normalisée, pour laquelle un paramètre interne en écart de mesure d'étalonnage / contrôle a été détecté et pour transmettre la valeur normalisée modifiée à l'appareil (1) de diagnostic in vitro, qui a détecté l'écart, afin de permettre de disposer, dans l'appareil (1) de diagnostic in vitro, d'une valeur de résultat constante, **caractérisé en ce que**
l'unité (3) de commande est configurée pour évaluer les écarts d'une valeur normalisée définie en fonction de charges de réactifs d'essai utilisées, des composants du système d'appareil ou du type d'appareil,
dans lequel l'évaluation comprend une comparaison des écarts d'un paramètre de mesure interne d'étalonnage / contrôle et de données de mesure d'essais de patients d'une pluralité d'appareils de diagnostic in vitro.

2. Système suivant la revendication 1, dans lequel le paramètre interne de mesure d'étalonnage / contrôle est un paramètre, qui est associé au réactif de l'essai utilisé pour effectuer le diagnostic in vitro.

3. Système suivant la revendication 1, dans lequel le paramètre interne de mesure de l'étalonnage / contrôle est un paramètre de composant du système d'appareil.

4. Système suivant l'une des revendications 1 à 3, dans lequel le au moins un appareil (1) de diagnostic in vitro est configuré pour acheminer supplémentairement à l'unité (3) de commande des données de mesure d'un échantillon de patient mesuré par un essai (essai de patient).

5. Système suivant la revendication 4, dans lequel l'unité (3) de mesure est configurée en outre pour évaluer les données de mesure de l'essai du patient, à l'aide de données de mesure antérieures provenant d'essais de patients, de contrôles et/ou d'étalonnages.

6. Système suivant l'une des revendications 1 à 5, dans lequel l'unité (3) de commande est configurée pour accéder à une base de données ayant des données se rapportant aux paramètres de mesure ou de mesures d'étalonnage / contrôle associes aux réactifs d'essai et/ou à des données se rapportant aux paramètres de composants du système d'appareil et/ou à des données se rapportant aux essais de patients.

7. Système suivant l'une des revendications 4 à 6, dans lequel on modifie la valeur normalisée par un facteur de progression, que l'on détermine sur la base (i) d'un écart individuel d'un appareil de diagnostic in vitro, à une valeur normalisée, (ii) d'un écart, qui dépend de la charge de réactifs d'essai de plusieurs appareils de diagnostic in vitro, à une valeur normalisée, (iii) d'un écart de données de mesure provenant d'essais de patients à des données de mesure antérieures provenant d'essais de patients, (iv) d'un écart, dépendant du type d'appareil de plusieurs appareils de diagnostic in vitro, à une valeur normalisée, (v) d'un écart, qui dépend de composants du système d'appareil de plusieurs appareils de diagnostic in vitro, à une valeur normalisée, (vi) d'un écart des paramètres de mesure ou de mesures d'étalonnage / contrôle à des paramètres de mesure ou de mesures d'étalonnage / contrôle dans une pluralité d'appareils de diagnostic in vitro et/ou (vii) d'une combinaison d'un écart, qui dépend de composants du système d'appareil, d'un écart, qui dépend de charges de réactifs d'essai, et/ou d'un écart de données de mesure provenant d'essais de patients.

8. Système suivant l'une des revendications 1 à 7, dans lequel le au moins un appareil (1) de diagnostic in vitro est configuré pour détecter et acheminer à l'unité (3) de commande l'écart d'un paramètre interne de mesure d'étalonnage / contrôle à une valeur normalisée définie une fois par heure, par 12h, par jour, par 2, 3, 4, 5, 6 jours, par semaine, par 2, 3 semaines, par mois, par 2, 3, 4, 5, 6, 7, 8, 9, 10, 11 mois, par année ou sur le cycle de vie de l'appareil (1) de diagnostic in vitro, des réactifs d'essais ou d'un composant du système ou d'une partie du cycle de vie.

9. Procédé de modification d'une valeur normalisée définie d'un paramètre interne de mesure d'étalonnage / contrôle d'au moins un appareil (1) de diagnostic in vitro, dans lequel le paramètre interne de mesure d'étalonnage / contrôle, mesuré dans un appareil (1) de mesure in vitro, a un écart à la valeur normalisée, comprenant l'acheminement de l'écart à au moins une unité (3) de commande, l'évaluation de l'écart dans l'unité (3) de commande et la transmission d'une valeur normalisée, modifiée sur la base de l'écart, à l'appareil (1) de diagnostic in vitro, qui a détecté l'écart, dans lequel en outre on achemine des données de mesure d'un essai de patient à l'unité (3) de commande, et dans lequel, de préférence on détecte et on achemine l'écart du paramètre interne de mesure d'étalonnage / contrôle à une valeur normalisée définie une fois par heure, par 12h, par jour, par 2, 3, 4, 5, 6 jours, par semaine, par 2, 3 semaines, par mois, par 2, 3, 4, 5, 6, 7, 8, 9, 10, 11 mois, par année ou sur le cycle de vie de l'appareil de diagnostic in vitro, des réactifs d'essais ou d'un composant du système ou d'une partie du cycle de vie, **caractérisé en ce que** l'on effectue l'évaluation de l'écart à une valeur normalisée définie en fonction de charges de réactifs d'essai utilisées, des composants du système d'appareil et/ou du type d'appareil, dans lequel l'évaluation comprend une comparaison des écarts d'un paramètre interne de mesure d'étalonnage / contrôle d'une pluralité d'appareils de diagnostic in vitro.

10. Procédé suivant la revendication 9, dans lequel le paramètre interne de mesure d'étalonnage / contrôle est un paramètre, qui est associé aux réactifs de l'essai utilisés pour effectuer le diagnostic in vitro, ou un paramètre de composant du système d'appareil.

11. Procédé suivant l'une des revendications 9 et 10, dans lequel on modifie la valeur normalisée par un facteur de progression, que l'on détermine sur la base (i) d'un écart individuel d'un appareil de diagnostic in vitro, à une valeur normalisée, (ii) d'un écart, qui dépend de la charge de réactifs d'essai de plusieurs appareils de diagnostic in vitro, à une valeur normalisée, (iii) d'un écart de données de mesure provenant d'essais de patients à des données de mesure antérieures provenant d'essais de patients, (iv) d'un écart, dépendant du type d'appareil de plusieurs appareils de diagnostic in vitro, à une valeur normalisée, (v) d'un écart, qui dépend de composants du système d'appareil de plusieurs appareils de diagnostic in vitro, à une valeur normalisée, (vi) d'un écart des paramètres de mesure ou de mesures d'étalonnage / contrôle à des paramètres de mesure ou de mesures d'étalonnage / contrôle dans une pluralité d'appareils de diagnostic in vitro et/ou (vii) d'une combinaison d'un écart, qui dépend de composants du système d'appareil, d'un écart, qui dépend de la charge de réactifs d'essai, et/ou d'un écart de données de mesure provenant d'essais de patients.
